# EUROPEAN PATENT APPLICATION

(11) **EP 4 019 816 A1**
(43) Date of publication of application: **29.06.2022**
(21) Application number: 21214517.1
(22) Date of filing: 14.12.2021
(51) Int. Cl.: F16K 24/04, F16K 15/14, B64D 11/04, F16K 24/06, A47J 31/46

(54) **VENTING DEVICES FOR AIRCRAFT BREWING APPARATUS**

(30) Priority: 14.12.2020 US 202017121751
(71) Applicant: B/E Aerospace, Inc., Winston-Salem, NC 27105 (US)
(72) Inventor: DEBALD, Keith R., Gardner, 66030 (US); HOWARD, David, Olathe, KS, 66062 (US); RENZ, Jeffrey, Overland Park, Kansas, 66207 (US); CONROW, Susan, Lees Summit, MO, 64081 (US)
(74) Representative: Dehns

(57) **Abstract**

An air vent valve assembly for a tank assembly (10) of a beverage maker for aircraft includes a valve housing (102) having an interior chamber (104) and an inlet flow passage (106) in fluid communication with the interior chamber, and a valve base (108) that mates with the valve housing. The valve base is configured and adapted to be attached to a tank assembly of a beverage maker. The valve base includes an interior flow chamber (110) in fluid communication with the interior chamber of the valve housing and a flow outlet (112) in fluid communication with the interior flow chamber of the valve base. The air vent valve assembly includes an umbrella valve (114) operatively connected to at least one of the valve housing or the valve base between the flow outlet of the valve base and the inlet flow passage of the valve housing.

## Description

### BACKGROUND

### 1. Field

The present disclosure relates to venting and draining of containers, and more particularly to venting and draining for tank assemblies of beverage makers used in aerospace applications.

### 2. Description of Related Art

Air vent valves are typically used in aircraft beverage makers in conjunction with filling and draining a fresh water tank assembly. While a number of variations of air vent valve systems currently exist, they are all primarily of the float type, some of which are ball-shaped. In these devices, a plastic or metal float is pushed up by liquid filling a tank to shut a vent hole at the end of a filling operation. For example, while the tank is filling, air moves around the float (ball), allowing the tank to fill, when the water level in the tank gets sufficiently high, it then pushed the ball up against a seat (or seal) and prevent the tank from filling further. Conversely, the float drops away from the vent hole to open up the vent during drainage of the liquid from the tank. These valves can sometimes have issues in the field caused by chemical attack, limescale, and oscillating behavior that causes the valve to leak because the body surface of the float is no longer smooth enough to seat properly against the vent hole, leading to removal and replacement.

The conventional techniques have been considered satisfactory for their intended purpose. However, there is an ever present need for improved systems and methods for valves used in venting and draining liquid from a tank. This disclosure provides a solution for this need.

### SUMMARY

An air vent valve assembly for a tank assembly of a beverage maker for aircraft includes a valve housing having an interior chamber and an inlet flow passage in fluid communication with the interior chamber, and a valve base that mates with the valve housing. The valve base is configured and adapted to be attached to a tank assembly of a beverage maker. The valve base includes an interior flow chamber in fluid communication with the interior chamber of the valve housing and a flow outlet in fluid communication with the interior flow chamber of the valve base. The air vent valve assembly includes an umbrella valve operatively connected to at least one of the valve housing or the valve base between the flow outlet of the valve base and the inlet flow passage of the valve housing.

In some embodiments, the valve housing includes a receiving aperture having an inner diameter neck portion. The umbrella valve can include a stem and a diaphragm extending outwardly from the stem. The stem of the umbrella valve can rest in the receiving aperture. The inner diameter neck portion can include an inner diameter stepped portion. The stem of the umbrella valve can include an end tip and a neck portion between the end tip and an umbrella base. The stem of the umbrella valve can be tapered. The stem of the umbrella valve can include a conical shaped end tip. The inner diameter stepped portion of the valve housing can be meshed with the neck portion of the stem. An outer diameter of a portion of the stem can be larger than an inner diameter of a portion of the receiving aperture. The valve base can include at least one arm extending into the interior flow chamber of the valve base. The valve base can include a protrusion extending from the at least one arm.

The umbrella valve can include a corresponding mating aperture to receive the protrusion of the valve base. An o-ring seal can be positioned between the valve base and the valve housing. In a first valve seating position, the umbrella valve can seal against the valve housing. In a second seating position, the umbrella valve can permit fluid flow from the inlet flow passage to the flow outlet. For example, in a first valve seating position, a perimeter of the diaphragm of the umbrella valve can abut the valve housing and, in a second seating position, at least a portion of the perimeter portion of the diaphragm can be spaced apart from the valve housing. The umbrella valve can include a silicone material.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic perspective exploded view of a vent valve assembly constructed in accordance with the present disclosure, showing the umbrella valve;
Fig. 2A is a schematic cross-sectional of the vent valve assembly of Fig. 1, showing a first valve seating position (closed);
Fig. 2B is a schematic cross-sectional of the vent valve assembly of Fig. 1, showing a second valve seating position (open);
Fig. 3 is a detail view of Fig. 2A, showing the abutment between the diaphragm and the valve housing; and
Fig. 4 is a schematic perspective view of a tank assembly with the vent valve assembly of Fig. 1.

### DETAILED DESCRIPTION

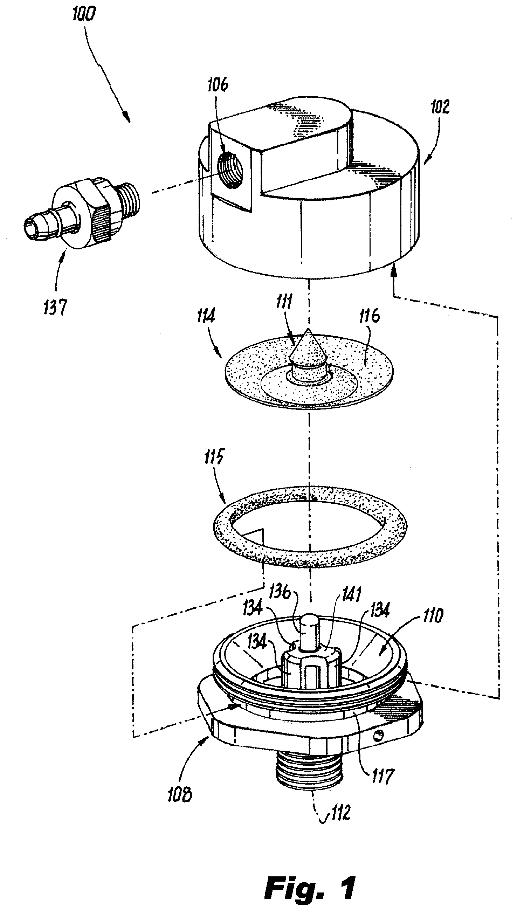

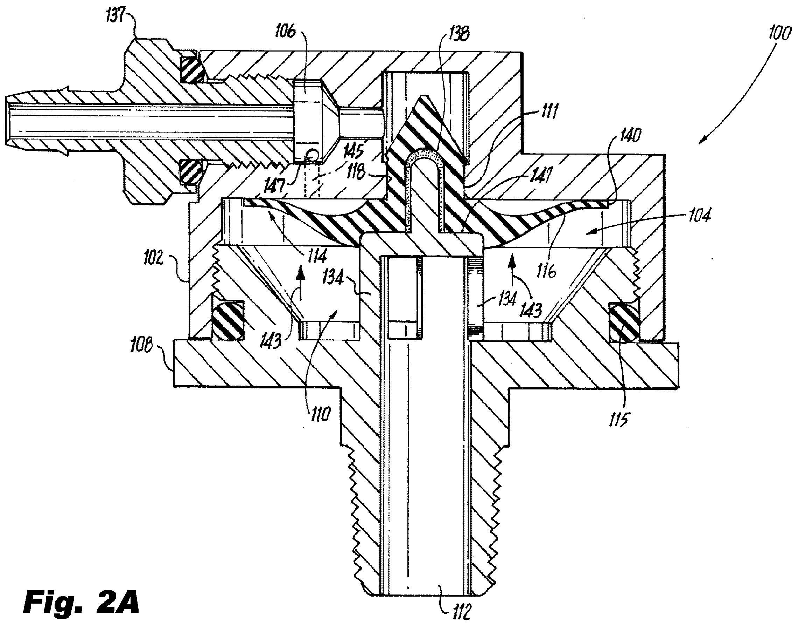

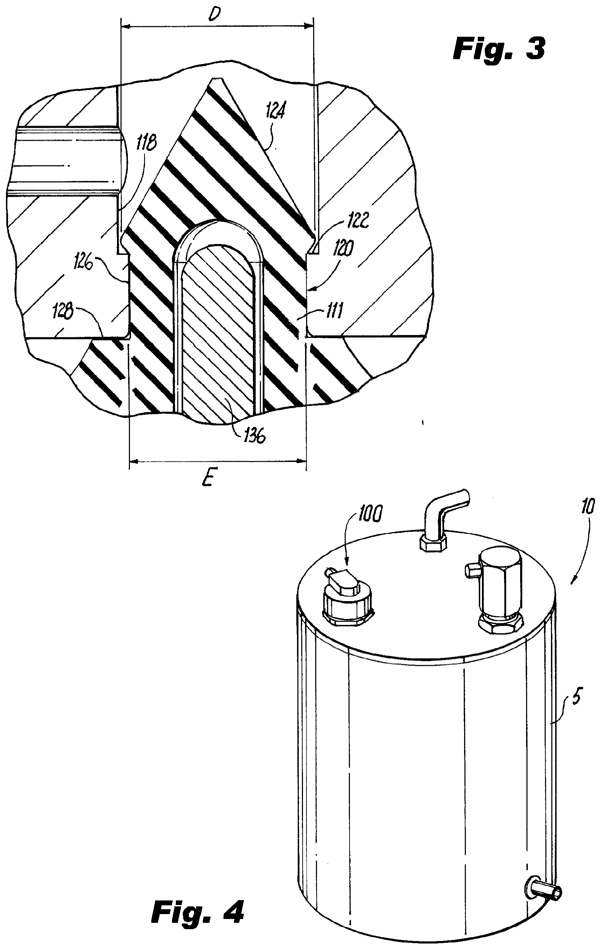

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. Other embodiments of systems in accordance with the disclosure, or aspects thereof, are provided in Figs. 2A-4, as will be described. The systems and methods described herein can provide an air vent valve assembly with improved performance including increased durability and reliability of valve assembly components.

As shown in Fig. 1, an air vent valve assembly 100 for a tank assembly 10 of a beverage maker for aircraft includes a valve housing 102. The tank assembly 10 includes a tank 5 and the valve assembly 100, among other things. The valve assembly 100 includes a valve base 108 that mates with the valve housing 102. The valve base 108 is configured and adapted to be attached to the tank assembly 10. The air vent valve assembly 100 includes an umbrella valve 114 including a stem 111. The umbrella valve 114 is operatively connected to the valve housing 102 and the valve base 108, as will be described in more detail below. The umbrella valve 114 includes a diaphragm 116 extending outwardly from the stem 111. The umbrella valve 114 is made from a silicone material. It is contemplated, however, that umbrella valve 114 can be made from a variety of other suitable flexible, durable materials. The assembly 100 includes an o-ring seal 115 positioned between the valve base 108 and the valve housing 102. The o-ring seal 115 rests within a seal groove 117 of the valve base 108.

Traditional valves use a ball which tends to be limited to materials that are buoyant in water and can withstand the high operating temperatures and various disinfection chemicals that are present in service. In view of this, the ball valve can experience issues in the field caused by chemical attack, limescale, and oscillating behavior that causes the valve to leak because the body surface of the float is no longer smooth enough to seat properly against the vent hole, leading to removal and replacement. The use of an umbrella valve design allows for a broader selection of materials that better withstand the exposures that occur in service because buoyancy is not a requirement. This results in the umbrella valve 114 being more reliable than a traditional ball design.

With reference now to Figs. 1 and 2A-2B, the valve housing 102 includes an interior chamber 104 and an inlet flow passage 106 in fluid communication with the interior chamber 104. The assembly includes a barbed tube fitting 137 is attached to the inlet flow passage 106, allowing for exchange of outside air through the vent valve assembly 100. The valve base 108 includes an interior flow chamber 110 in fluid communication with the interior chamber 104 of the valve housing 102. The valve base includes a flow outlet 112 in fluid communication with the interior flow chamber 110 of the valve base 108. The umbrella valve 114 is positioned between the flow outlet 112 of the valve base 108 and the inlet flow passage 106 of the valve housing 102 to selectively open and close the flow path therebetween.

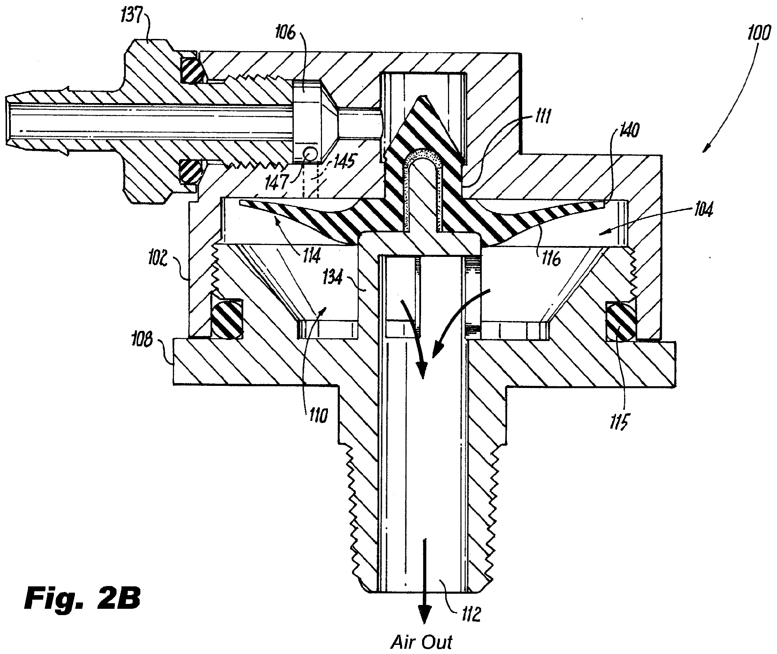

As shown in Figs. 2A-2B, the valve housing 102 includes a receiving aperture 118 having an inner diameter neck portion 120. In the embodiment of Fig. 2, the inner diameter neck portion 120 includes an inner diameter stepped portion 122. The stem 111 of the umbrella valve 114 rests in the receiving aperture 118. The stem 111 of the umbrella valve 114 includes a tapered end tip 124, e.g. a conical shaped end tip, and a neck portion 126 between tapered end tip 124 and an umbrella base 128. The inner diameter stepped portion 122 of the valve housing 102 is loosely meshed with the neck portion 126 of the stem 111 between the tapered end tip 124 and the umbrella base. An outer diameter D of a portion of the stem 111 (e.g. the largest dimension of tapered end tip 124) is larger than an inner diameter E of stepped portion 122 of the receiving aperture 118. This allows the umbrella valve 114 to rest in place within aperture 118. Housing 102 includes two passages 145 (only one shown in cross-sectional views of Figs. 2A-2B, as the other would be in the other cross-sectional half) for allowing fluid (liquid or air) to flow from inlet 106 to outlet 112 when the diaphragm 116 is not seated (Fig. 2B). A passage opening 147 is visible at proximate to inlet 106. Passages 145 are configured and adapted to be sufficiently small to prevent bursting of the diaphragm 116 under high pressure. The valve base 108 includes spaced apart arms 134 extending into the interior flow chamber 110 of the valve base 108. The valve base 108 includes a protrusion 136 extending from the arms 134. The umbrella valve 114 includes a corresponding mating aperture 138 to receive the protrusion 136 of the valve base 108. The protrusion 136 and shelf portions 141 of arms 134 provide additional support to the umbrella valve 114 within assembly 100. It is contemplated that only one arm 134 may be required. Moreover, it is also contemplated that assembly 100 does not need arms 134 or protrusion 136 and that valve 114 could be fully supported by aperture 118.

Fig. 2A shows the umbrella valve 114 in a first valve seating position, e.g. a seated closed position, a perimeter 140 of the diaphragm 116 of the umbrella valve 114 abuts the valve housing 102. A small amount of pretension (indicated schematically by pressure arrows 143) holds the diaphragm 116 seal in the closed position such that the perimeter 140 is in a sealing abutment with housing 102. Additional pressure applied at 112 further improves this seal. As shown in Fig. 2B, when the tank 5 drains, the vacuum created in the tank 5 is sufficient to unseat the seal on diaphragm 116 to a second seating position and allow air to enter the tank 5 through inlet 106 via passages 145. The valve 114 is unseated when at least a portion of the perimeter 140 of the diaphragm 116 is spaced apart from the valve housing 102. This seated and unseated scenario largely applies for when the aircraft does not have power, e.g. during draining on runway when aircraft power is off. For situations where there is power, e.g. when the tank is filling and when the aircraft water system is pressurized, the appliance software opens a solenoid to vent the tank 5 until a full tank is detected.

The methods and systems of the present disclosure, as described above and shown in the drawings, provide for more reliable air vent valve assemblies that have reduced wear and leakage in the field. While the apparatus and methods of the subject disclosure have been shown and described with reference to preferred embodiments, those skilled in the art will readily appreciate that changes and/or modifications may be made thereto without departing from the scope of the invention as defined by the claims.

## Claims

1. An air vent valve assembly for a tank assembly of a beverage maker for aircraft, comprising:
a valve housing (102) having an interior chamber (104) and an inlet flow passage (106) in fluid communication with the interior chamber;
a valve base (108) that mates with the valve housing, the valve base being configured and adapted to be attached to a tank assembly (10) of a beverage maker, the valve base including an interior flow chamber (110) in fluid communication with the interior chamber of the valve housing, a flow outlet (112) in fluid communication with the interior flow chamber of the valve base; and
an umbrella valve (114) operatively connected to at least one of the valve housing or the valve base between the flow outlet of the valve base and the inlet flow passage of the valve housing.

2. The air vent valve assembly of claim 1, wherein the umbrella valve includes a stem (111) and a diaphragm (116) extending outwardly from the stem.

3. The air vent valve assembly of claim 2, wherein the valve housing includes a receiving aperture (118) having an inner diameter neck portion (120), wherein the stem of the umbrella valve rests in the receiving aperture.

4. The air vent valve assembly of claim 3, wherein the inner diameter neck portion includes an inner diameter stepped portion.

5. The air vent valve assembly of claim 4, wherein the stem of the umbrella valve includes an end tip (124) and a neck portion (126) between the end tip and an umbrella base (128).

6. The air vent valve assembly of claim 5, wherein the inner diameter stepped portion of the valve housing is meshed with the neck portion of the stem.

7. The air vent valve assembly of any of claims 3 to 6, wherein the stem of the umbrella valve is tapered.

8. The air vent valve assembly of claim 7, wherein an outer diameter of a portion of the stem is larger than an inner diameter of a portion of the receiving aperture.

9. The air vent valve assembly of any preceding claim, wherein the valve base includes at least one arm (134) extending into the interior flow chamber of the valve base, wherein the valve base includes a protrusion (136) extending from the at least one arm.

10. The air vent valve assembly of claim 9, wherein the umbrella valve includes a corresponding mating aperture (138) to receive the protrusion of the valve base.

11. The air vent valve assembly of any preceding claim, further comprising an o-ring seal positioned between the valve base and the valve housing.

12. The air vent valve assembly of any preceding claim, wherein, in a first valve seating position, the umbrella valve seals against the valve housing and wherein, in a second seating position, the umbrella valve permits fluid flow from the inlet flow passage to the flow outlet.

13. The air vent valve assembly of any preceding claim, wherein the umbrella valve includes a silicone material.

14. The air vent valve assembly of claim 1, wherein the umbrella valve includes a stem and a diaphragm extending outwardly from the stem, wherein, in a first valve seating position, a perimeter of the diaphragm of the umbrella seals against the valve housing and wherein, in a second seating position, the diaphragm permits fluid flow from the inlet flow passage to the flow outlet.

15. The air vent valve assembly of claim 1, wherein the umbrella valve includes a stem, and wherein the stem of the umbrella valve includes a conical shaped end tip.
